(19) Europäisches Patentamt
European Patent Office
Office européen des brevets

(11) **EP 4 470 729 A1**

(12) **EUROPEAN PATENT APPLICATION**

(43) Date of publication:
**04.12.2024 Bulletin 2024/49**

(51) International Patent Classification (IPC):
***B25J 9/16*** *(2006.01)*

(21) Application number: **23216229.7**

(52) Cooperative Patent Classification (CPC):
**B25J 9/1612;** G05B 2219/39505; G05B 2219/39509

(22) Date of filing: **13.12.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2023 US 202318203097**

(71) Applicant: **INTEL Corporation**
**Santa Clara, CA 95054 (US)**

(72) Inventors:
- **GONZALEZ AGUIRRE, David Israel**
  **Portland, 97209 (US)**
- **ZAMORA ESQUIVEL, Julio Cesar**
  **West Sacramento, 95605 (US)**
- **CAMPOS MACIAS, Leobardo**
  **44240 Guadalajara, Jalisco (MX)**
- **FELIP LEON, Javier**
  **Hillsboro, 97006 (US)**

(74) Representative: **2SPL Patentanwälte PartG mbB**
**Landaubogen 3**
**81373 München (DE)**

(54) **OBJECT-AGNOSTIC FAST GRASPING-POINTS ESTIMATION VIA GEOMETRIC-ALGEBRA**

(57) Various aspects of techniques, systems, and use cases for selecting grasping configurations for a robot are disclosed. Geometric primitives are generated to model the robot for grasping and manipulation by the robot. The geometric primitives are combined using various functions to determine which configuration to use. The instantaneous configuration is determined, as well as the forward kinematics and links to determine active geometric primitives of the gripper. The active geometric primitives are used to approximate an x, y, and z coordinate of each point of the primitives, a distance between the point and a grasping target, and an associated surface link. The configurations are ranked based on grasping metrics and one of the configurations selected to use accordingly.

FIG. 1

**Description**

BACKGROUND

Robots and other autonomous agents may be programmed to complete complex real-world tasks. Robotics use artificial intelligence (AI) to perform tasks in industrial environments. Robotics span a wide range of applications, such as industrial applications (e.g., smart manufacturing assembly lines, multi-robot automotive component assembly, computer and consumer electronics fabrication, smart retail and warehouse logistics, robotic datacenters, etc.), service, hospitality, and edutainment. Robots create and deliver value by executing heavy, repetitive, and precise physical actions upon the environmental and detached objects.

BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 illustrates a grasp synthesis method that uses a large amount of point-to-surface directed distance computations according to an example.
FIG. 2 illustrates quadric shapes for oriented distance computations according to an example.
FIG. 3A illustrates geometric algebra for robot representation according to an example.
FIG. 3B illustrates a flowchart of operations of FIG. 3A according to an example.
FIG. 4 illustrates a distance calculation according to an example.
FIG. 5 illustrates stages of the high-performance grasping computation process according to an example.
FIG. 6 illustrates a basis blades computation using bit representations according to an example.
FIG. 7A provides an overview of example components for compute deployed at a compute node.
FIG. 7B provides a further overview of example components within a computing device.

DETAILED DESCRIPTION

Systems and techniques described herein provide a robot and method that uses robotic grasping. In particular, the method uses a geometric algebra constructive solid geometry (GA-CSG) for robot representation to determine characteristics for grasping.

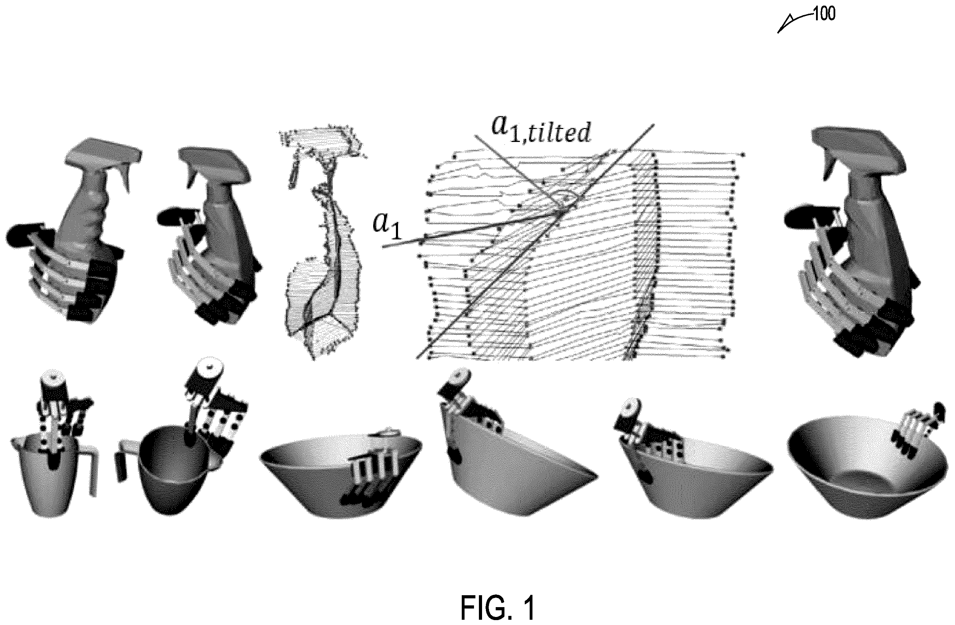

Regardless of the application, end-to-end robot grasping-and-manipulation skills are essential value-generators involving multiple cognitive states. FIG. 1 illustrates a grasp synthesis method using a large amount of point-to-surface directed distance computations according to an example. The interdependent and concurrent cognitive states 100 shown in FIG. 1 involve coordinating perception, prediction, planning and control of heterogenous sensors and actuators and show different views of the gripper and an object. The 3Ps-states (perception, prediction and planning) imply heavy geometric computational workloads to allow generic and reliable grasping for objects in presence of structure and appearance diversity. Hence, autonomous robot grasping asserts not only a 6D pose of the end-effector's (gripper-state) to ensure a suitable object fixation, but also a continuous assessment of the stability of the grasps given the inherent sensing and actuation limitations and uncertainties of the process.

Diverse methodologies for grasp planning, synthesis and stability assessment have been proposed using a wide variety of sensing principles and actuation mechanisms. Due to the intrinsic geometric nature of the problem, all methodologies expose through multiple phases of their pipeline a common and extensively used operation: the signed distance estimation between points and geometrics primitives. This so-called oriented distance (a sign depicting relative orientation with respect to the geometric primitive) computation decides: i) the approximation points during pre-grasp motions on both object and effector, ii) contact surfaces (as concave collections of contact points) at grasp during manipulations, and iii) when retreating avoiding unwanted contacts.

Before grasping, robots consider multiple proposition and options for object grasping. Each grasping hypothesis is created by estimating the approaching, contact and stability contact points between end-effector and objects. It is desirable to accelerate critical representations and computations asserting the oriented-distance between points and robot models to generate, predict and execute dependable robot grasps upon free-form objects with general robot shapes and unconstrained kinematic capabilities

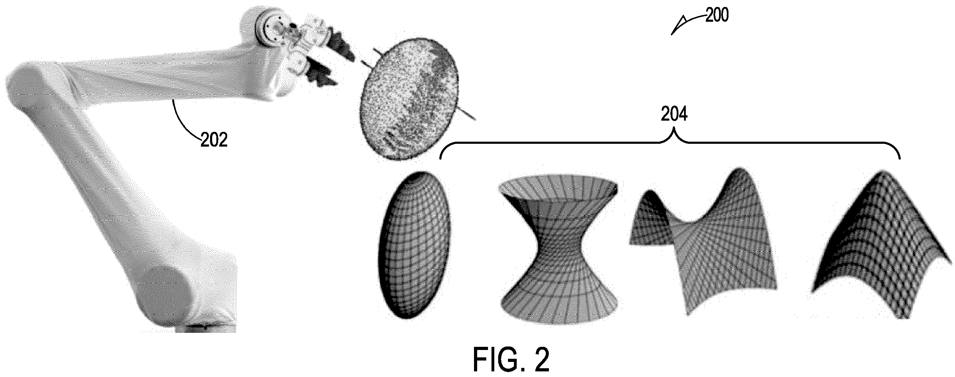

One method to calculate the directed distance between an ellipsoid is the Eberly formation. FIG. 2 illustrate the Eberly formulation, directed distance formulation between point and ellipse according to an example. The Eberly formulation is a doubly periodic differential function that only allows a solution via optimization with gradient based, Monte Carlo or sampling methods. While the Eberly formulation empowers a solution, it has multiple computational drawbacks including non-regular computational performance, non-parallelizable, and lack of shapes generalization.

Non-regular Computational Performance: The Eberly method is iterative, and convergence depends on starting point or added cues. This makes the processing pipeline expose non-regular execution times. This implies either coarse results or exceptionally long computations. When using Clifford algebras, it is possible to apply a multi vector formalism which computations can be implemented in a compact finite bit operation. Clifford algebras use these capabilities with a novel robot representation to leverage computational benefits. This is useful for high-performance control loops (up to 1 kHz) found in today's collaborative robots (Cobots).

Non-parallelizable: Due to the cyclical nature of all gradient methods and Monte Carlo, it is expensive (large silicon footprint, time and power consumption) to design accelerators for the numerically insertable floating-point operations involved. One advantage of computing via multi vectorial representations is amplified by pipelining (bit-wise) wedge-products for maximal throughput and silicon utilization. Most multi-vector basis computations are defined as simple logical and shift bits operation. This means that floating point operation are used significantly less (coefficients only) than in analytic approaches, and also translates into higher numerical stability and less round-off errors.

Lack of shapes generalization: This occurs because a specific formulation per geometric primitive is used when following the Eberly formulation. Earlier analytic formulation suffers from this fundamental problem, namely earlier geometric-primitive representations do not generalize at all, not even with formulations within the same family of shapes. For example, while an ellipsoid is quadric, the algorithm derived from the Eberly formulation does not work with paraboloid or a hyperboloid without further case-by-case constraints.

Because of their production processes, most robot links and gripper shapes are composed by extrusion, revolutions, or other forms of manufacturing-friendly geometric compositions. Thus, it is possible to closely decompose their shape-structure into linked Boolean arrangements of volumetric sub-spaces also called geometric primitives. This idea is the generalization of Constructive Solid Geometry (CSG) by logically combining signed distances. In other words, by combining union, subtraction, negation, and intersection of signed distance functions arising from geometric primitives (such as oriented-planes, and ellipsoids), general and efficient modelling of robots may be produced for grasping and manipulation computations.

With this robot representation and subject to the robot-grasping considerations, the ubiquitous oriented-distance computation between end-effector planes, ellipsoids, planes, and objects points (from three dimensional (3D) computer aided design (CAD) models or sensor point-clouds) is a perennial computational building-block. Thus, estimating, evaluating, and predicting thousands of grasp hypotheses per motion-step may be accelerated via representations and geometric algebra hardware.

High-performance oriented-distance computations: The method and pipeline herein reduces the time and energy consumption to generate, rank, and select the most suitable grasping configurations in real-world tasks. This also allows an increase in the robustness of exiting methodologies that are limited on the small amount of samples/hypothesis able to be generated in each time slot during task execution. Energy usage is one consideration for battery powered Autonomous Mobile Robots (AMRs).

Simultaneously Predict and Simulate Haptic Signals: Using geometric algebra computations, it is possible not only to compute the signed distance between point and primitives, but also the associated surface points on the primitive with reduce complexity and superior cash efficiency. This allows the tessellation of shapes while defining the expected contact-pixels signals, enabling the determination of an anomaly situation occluded to range and image sensors.

Efficient Hardware Acceleration: Due to recent advances in computational geometry, it is possible to formulate and build an internet protocol (IP) block exploiting the synergistic combination of the robot's model representation and directed distances computations allowing high-performance through the stack from embedded vision processing units (VPUs) to cloud computing simulations.

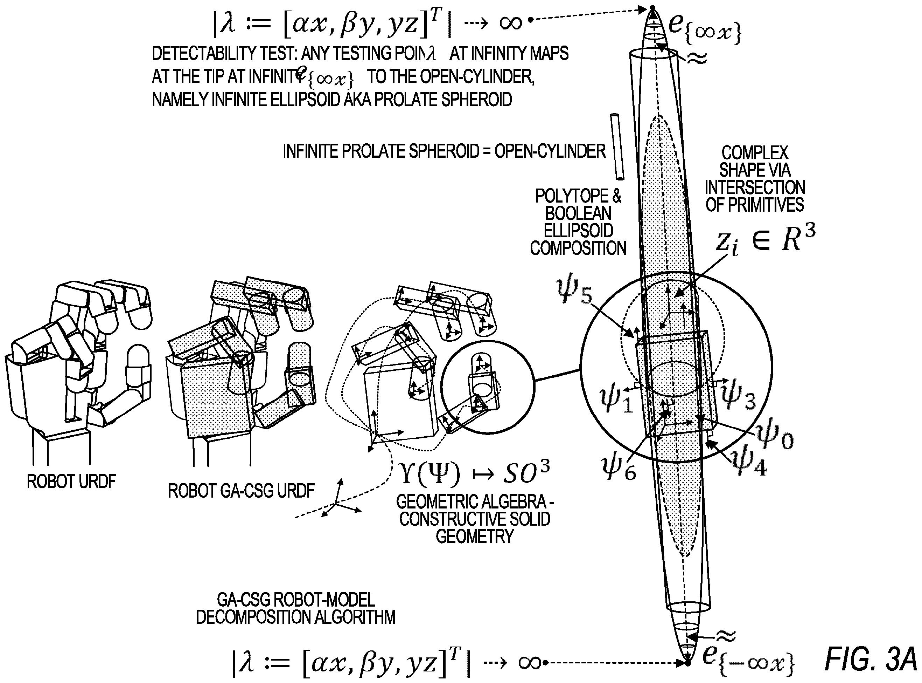

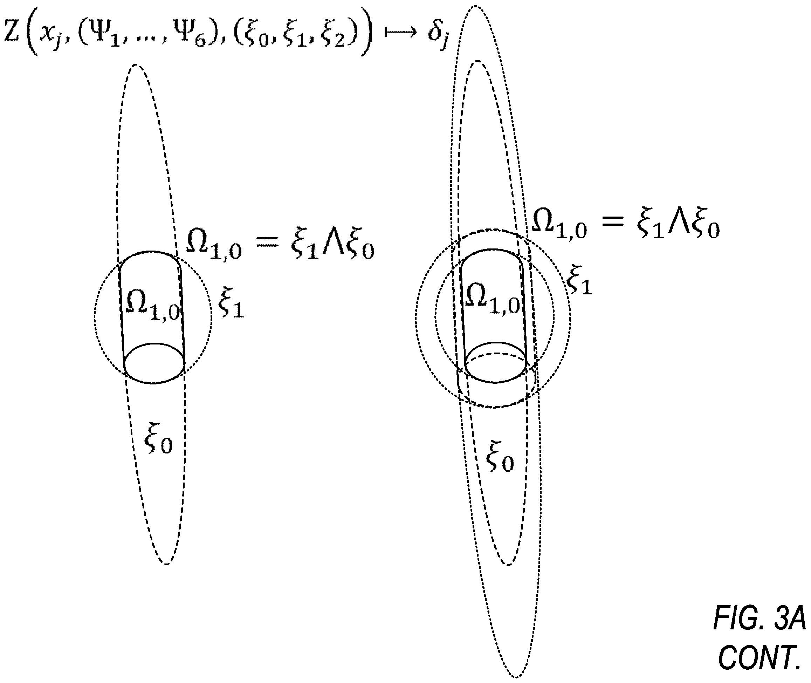

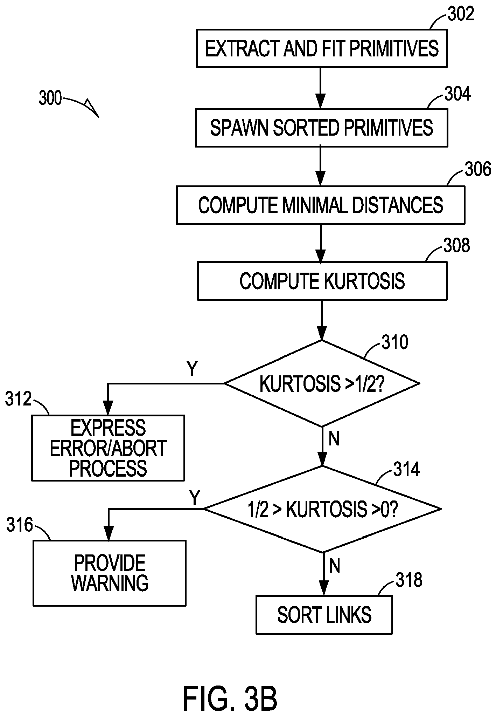

FIG. 2 illustrates quadric shapes for oriented distance computations according to an example. The system 200 includes the gripper 202 (or manipulator) and a set of different quadric shapes 204. FIG. 3A illustrates geometric algebra for robot representation according to an example. FIG. 3A shows decomposition of the gripper 350 into geometric shapes and aligned distances. FIG. 3B illustrates a flowchart of operations of FIG. 3A according to an example. The Geometric Algebra (GA) and CSG for Universal Robot Description Format (URDF) is shown. This permits modelling and computation in a hierarchical manner including (noise and numerical) stability directed distance margins to ensure determinism, parallelism with low silicon footprint/utilization, latency and energy consumption for online-grasp planning.

When computed, the directed distance between a point at infinity $|\lambda :=$ $[\alpha x, \beta y, \gamma z]^T| \to \infty$ and a quadric (Prolated spheroid) modeling a cylindrical surface, the result is the ellipsoid apex point to the major axes as shown in the text frame in FIG. 3A. This infinity point $\pm e_{\{\infty x\}}$ is the "closest" to the $\lambda$. Other methods used to realize such calculations may not be able to produce these results by treating the open-cylinder and point at infinity as intractable points.

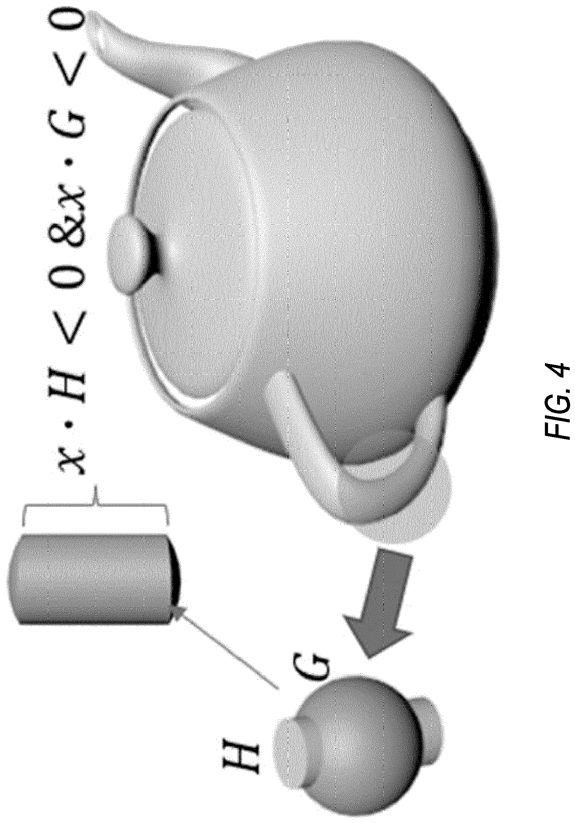

As above, the ability to efficiently compute the signed distance between a point and a geometric primitive is desired. To exploit this mathematical capability, the robot may be modelled as a collection of geometric primitives. To better describe the overall invention, the process is split in two phases; off-line and online as described in FIGS. 3A, 3B, and 4.

**Off-line Phase**

Because robot grippers (and other servo actuated mechanisms) are usually modeled via Boolean composition, extrusions, and implicit curves to define free form surfaces, these shapes may be tightly approximated or fully decomposed into a collection of generalized quadrics via Clifford geometric primitives, per FIG. 1. This decomposition can approximate most physical robots up to a minimal deviation under grasping tolerances in the range of about 0.5 to about 2 mm. By decomposing general CAD models into set of open and closed polytopes and quadrics, each robot kinematic element (so called robot links) turns into a collection of interconnected geometric primitives. To further increase blending and shape expressivity, it is possible to apply Boolean operators such as union, intersection, and subtraction into so-called pseudo constructive solid geometry.

**GA-CSG Robot-model Decomposition (Algorithm 1)**

As shown in FIG. 3A and the method 300 of FIG. 3B, at operation 302 the primitives are extracted and fit. That is, for each mesh $i$ in the Unified Robot Description Format (URDF) (a mesh, or mesh object file represents a geometry): the geometric centroid $z_i \in R^3$ is first computed. All vertices $x_j \in R^3$ to $x'_j = x_j - z_i$ are next recentered. The bounding box $\Psi$, which spans the minimal volume, is computed. The bounding box $\Psi$ defines 6 clipping oriented planes $\Psi_1 := \{n_1, h_1\} \in \mathcal{G}_{6,3}$ to $\Psi_6 := \{n_6, h_6\} \in \mathcal{G}_{6,3}$, with $\mathcal{G}_{6,3}$ the Geometric Algebra basis representation, where orientation is set by a normal $n_1 \in R^3 \wedge |n| = 1$ and a Hesse distance $h \in R$. The bounding ellipsoid $\xi_0$ is then computed. The bounding ellipsoid $\xi_0$ constrains only the two axes with minimal spans in the bounding box $\Psi$. This is then repeated for the other two axes producing the ellipsoids $\xi_1$ and $\xi_2 \in \mathcal{G}_{6,3}$.

After the primitives are extracted and fit at operation 302, spawn-sorted primitives are generated at operation 304. In particular, for each set joint in the URDF (which may have more than one mesh), the implicit transformation defined by $\Upsilon(\Psi) \to SO^3$ is stored, as is the center of each ellipsoid $w_i$ and the main axes in decreasing length order: $[w_i, n_a, n_b, n_c \in R^3]$. At this point the implicit shapes $\Omega_{\{1,2\}} := \xi_1 \wedge \xi_2$ can define a large set of shapes as shown in FIG. 3A. This increases the morphological expressivity via directed distance Boolean compositions.

Next, noise and quantization robust directed margin radii are determined. As shown, at operation 306, for all vertices $x_j$ in the joint, the minimal distance to the surface of each of the planes ($\Psi_1, ..., \Psi_6$) and ellipsoid primitives ($\xi_0, \xi_1, \xi_2$) is computed such that the distances: $Z(x_j, (\Psi_1, ..., \Psi_6), (\xi_0, \xi_1, \xi_2)) \mapsto \delta_j$ are sorted progressively in a list to compute the cut-off radius by a target percentile $\varepsilon \sim 0.01$. This way the margins (as shown in FIG. 3A) adapt to the curvature and subtle deviations of the decomposition. This noise and quantization margin allows numerical stability without physical limits on the gripper.

After operation 306, directed distance - excess Kurtosis tests are run. In particular, at operation 308 the viability of the model transformation is verified by computing the Kurtosis (gaussian noise) of the $\delta_j$ distribution:

$$K(\delta) = \left[ \frac{E(\delta_j - \overline{\delta})^4}{(E(\delta_j - \overline{\delta})^2)^{\wedge 4}} \right]$$

If it is determined at operation 310 that the Kurtosis $K(\delta) > 1/2$, the process is aborted at operation 312. In addition, an error may be expressed announcing that the robot model cannot be transformed into this representations described herein.

If it is determined at operation 314 that the Kurtosis is greater than 0 ($0 < K(\delta) < 1/2$), then a warning is provided to the user at operation 316.

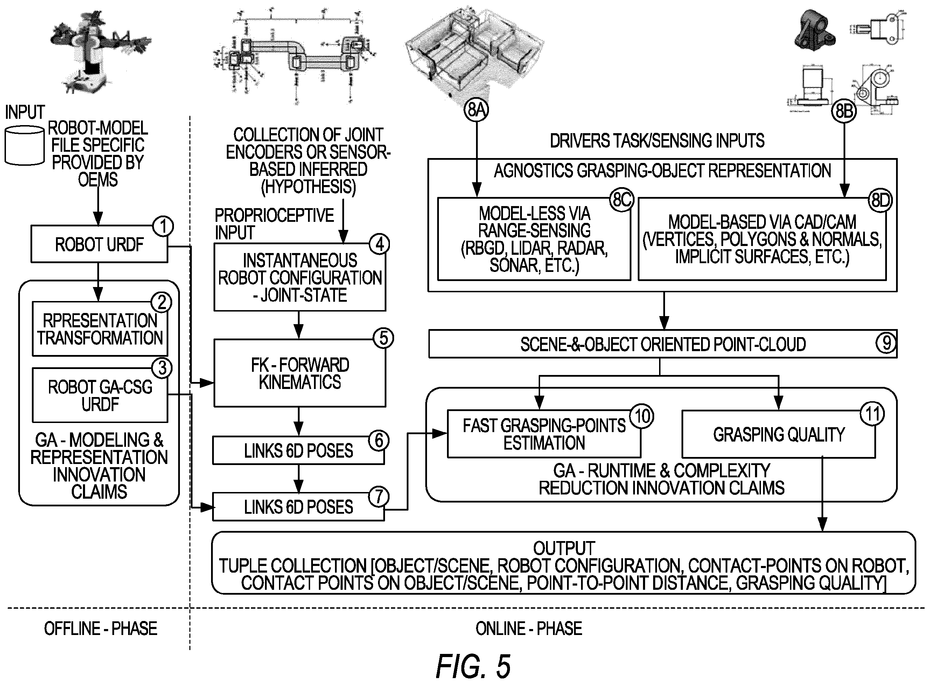

The robot links are serialized at operation 318. That is, the Robot links are sorted by volume of their bounding box $\Psi$ in a descending order for rapid pruning as described in step 7 in FIG. 5 and saved into a file.

Thus, the Boolean expressions are used efficiently via Lazy expression evaluation. This means (for example in FIG. 3A) to determine if a point is within a composed shape, the point is to be on the surface of a first ellipsoid 322 and simultaneously within a second ellipsoid 320 inner subspace in terms of their directed distance. This is fundamentally different from the CSG approach, where a surface mesh is approximated by a constructive tessellation of the basic shapes. In summary, the model of each link of the robot is implicitly described by a Boolean expression composed by assertions such as "on surface X" (and, or, not, xor) "within Y", or "on the positive side of the planes Zs" as notations of partitioning subspaces (X, Y, Z) computed as geometric primitives in G6,3. An acceleration feature in this representation is the ability to define two or more inflation-radii (dimensions of the sphere, ellipsoids, or planes distances in the polytopes) in such a way that for every primitive there may be a near surface and a solid surface. This allows a reduction in the number of computations when having substantial number of elements (in the point clouds) of the scene or objects. This conducts hierarchical tests from coarser-large-shape to smaller-and-finer details of the robot gripper or desired end-effector. Mathematically the use of Quadric Geometric Algebra simplifies the quadric representation by using a simple 9-dimensional vector to describe a geometric primitive, instead of using a matrix or a parametric trigonometrical representation. As described elsewhere, a Quadric H can be formulated in a multivectorial form by using the three-vanishing basis $e_{\infty x}$, $e_{\infty y}$, $e_{\infty z}$:

$$
\begin{aligned}
H \;=\;& \frac{h e_1}{a^2} + \frac{k e_2}{b^2} + \frac{l e_3}{c^2} \\
&+ \frac{1}{2}\left( \frac{h^2 e_{\infty x}}{a^2} + \frac{k^2 e_{\infty y}}{b^2} + \frac{l^2 e_{\infty z}}{c^2} - e_{\infty} \right) \\
&+ \frac{e_{ox}}{a^2} + \frac{e_{oy}}{b^2} + \frac{e_{oz}}{c^2}.
\end{aligned}
$$

Where (h, k, l) represents the center of the quadric and (a, b, c) the radius of (x, y, z) axis, this representation can be simplified by using a translator and the Quadric at the origin, in this case the translator is formulated by using the (h, k, l) position and mathematically formulated as:

$$
H = T H_o \tilde{T},
$$

Here $H_0$ is the Quadric at the origin. In this way, any quadric can be described by a vector as in the following table, saving memory and simplifying the operations.

Table 1

| Quadric | Vector (origin) |
|---|---|
| Point | $X_q = e_o$ |
| Ellipsoid | $H_o = \frac{e_{ox}}{a^2} + \frac{e_{oy}}{b^2} + \frac{e_{oz}}{c^2} - \frac{e_{\infty}}{2}$ |
| Hyperboloid of One sheet | $H_o = \frac{e_{ox}}{a^2} - \frac{e_{oy}}{b^2} + \frac{e_{oz}}{c^2} - \frac{e_{\infty}}{2}$ |
| Elliptic Cone | $H_o = \frac{e_{ox}}{a^2} - \frac{e_{oy}}{b^2} + \frac{e_{oz}}{c^2}$ |
| Hyperboloid of two sheets | $H_o = \frac{e_{ox}}{a^2} - \frac{e_{oy}}{b^2} + \frac{e_{oz}}{c^2} + \frac{e_{\infty}}{2}$ |
| Elliptic Paraboloid | $H_o = \frac{e_{ox}}{a^2} + \frac{e_{oz}}{c^2} + \frac{e_2}{2}$ |
| Parabolic Cylinder | $H_o = \frac{e_{ox}}{a^2} + \frac{e_2}{2}.$ |

(continued)

| Quadric | Vector (origin) |
|---|---|
| Cylinder | $$C_o = \frac{e_{ox}}{a^2} + \frac{e_{oz}}{c^2} - \frac{e_\infty}{2}$$ |
| Hyperbolic Cylinder | $$C_o = \frac{e_{ox}}{a^2} - \frac{e_{oz}}{c^2} - \frac{e_\infty}{2}$$ |
| Sphere | $$S_o = e_o - \frac{r^2 e_\infty}{2}$$ |
| Double Planes | $$DP_o = e_{ox} - \frac{d^2 e_\infty}{2}$$ |
| Intersecting Planes | $$IP_o = \frac{e_{ox}}{a^2} - \frac{e_{oz}}{c^2}$$ |
| Plane | $P_o = n_1 e_1 + n_2 e_2 + n_3 e_3$ |

Each one of these Geometric primitives fulfill the equation $H \cdot x_Q = 0$ for any given point $x_Q$ on the quadric surface in $G_{6,3}$ Geometric algebra following the mapping:

$$x_Q = xe_1 + ye_2 + ze_3 + \frac{1}{2}(x^2 e_{\infty x} + y^2 e_{\infty y} + z^2 e_{\infty z}) + e_o.$$

In general, the distance d from the point x to the surface H is given by $d = H \cdot x$. FIG. 4 illustrates a distance calculation according to an example. In this case, the intersection of two geometric primitives generates a volume in which the point inside of this volume fulfill the constraint $x \bullet H < 0$ and $x \bullet G < 0$.

**Computational Complexity Optimization**

The projective representation of any 3D quadric entity using linear algebra is given by a 4x4 matrix, then the computation of a distance d of a point x to the quadric M, is given by

$$d = x^T M x$$

Since **x** is a homogenous projective vector, it is represented by a 4D vector. Then d is computed by performing 20 MAC operations; in geometric algebra both are represented by a 9D vector and d is computed using $d = x \bullet M$, which only uses 9 MAC operations.

**On-line Phase**

FIG. 5 illustrates stages of the high-performance grasping computation process according to an example. The method 500 shown in FIG. 5 The method 500 begins with operation (**1**) the URDF file (CAD model and kinematic attributes) provided by the robot OEMs. This file is processed in operation (**2**), the offline phase to transform the frames and meshes (describing the 3D model of the robot) into a geometric collection of primitives with associated directed distance (also called radii). This results into the Robot GA-CSG URDF at operation (**3**). This process performance can take longer periods as the operations may be performed only once per robot, and the resulting representation is task and configuration independent.

Afterwards, the online phase has four heterogeneous inputs. From the offline phase and based on the instan-

taneous encoders $\Theta(t) \in R^n$ of the $n$ robot joints at operation **(4),** the URDF is used to compute forward kinematics at operation **(5).** Regarding the resulting 6D state of each of the links determined at operation **(6),** the subset of geometric primitives close to objects (via a bounding box filter) are selected as active geometric primitives at operation **(7).** This partitioning is performed for each configuration because robots with redundant kinematic chains (having more than 6 degrees of freedom (DoF)) tend to approach multiple links to the active task space.

Next, from the perception determined at operation **(8a)** and task representation at operation **(8b),** the objects grasp can be obtained in two main ways: i) **Model-less**: which is usually the raw results of range sensing in terms of point clouds or local surface descriptors without added attributes at operation **(8c).** This occurs in so-called semi-structured applications such as service robots or medical usages. This input can be taken directly into the next phase or can be preprocessed via subsampling and smoothing. The orientation of each point is computed with the camera (field of view) or lidar lattice information. These steps are application-specific and do not change the workflow. ii) **Model-based:** Many automations and manufacturing processes imply production or processing of objects whose structure is available in form of CAD/CAM models at operation **(8d).** In these cases, the method 500 collects all vertices, subdivides polygons, and evaluates implicit curves and surfaces (Non-uniform rational basis splines (NURBS) or Splines) to obtain points with at least the double (to hold Nyquist theorem on surface sampling) of the given granularity/repeatability imposed by the end-effector's accuracy, usually 0.5-0.1 mm for commercial grippers. In this model-based approach, the point orientations may be gathered either from the (triangle or quad) tessellation or the transposed gradient of the implicit surfaces. This scene and object-oriented point cloud determined at operation **(9)** abstracts and subsamples (with radius set to the gripper repeatability) the source of the grasping target. This has the benefit of making the later stages agnostic to point cloud origin, density, scale and other application- and sensor specific aspects.

The main computation occurs in the grasping points estimation at operation **(10).** Here the goal is to compute for each of the i points in the input cloud, $x_i \in R^3,$ to obtain the mapping:

$$\Gamma(x_i) \mapsto \left[ y_j \in R^3 \,\middle|\, \emptyset, k \,\middle|\, \emptyset, \delta_{\{i,j\}} \in R \right]$$

where $y_j$ denotes the point on the robot's surface link $k$ at a distance $\delta_{\{i,j\}}$ away from the surface point. Since a point may have no directed distance to few robot shapes, the $\emptyset$, formalizes that situation. Here the sign $\delta_{\{i,j\}}$ is positive along the normal of the robot surface. This convention avoids orientation uncertainty on noisy range sensing data. Obtaining $\Gamma(x_i)$ may be based on the Eberly formalization below.

Eberly formalization: **Distance from a Point to an Ellipsoid**

A general ellipsoid in 3D is represented by a center point **C,** an orthonormal set of axis-direction vectors {$U_0$, $U_1$, $U_2$}, and associated extents $e_i$ with $e_0 \geq e_1 \geq e_2 > 0$. The ellipsoid points are

$$\mathbf{P} = \mathbf{C} + x_0 \mathbf{U}_0 + x_1 \mathbf{U}_1 + x_2 \mathbf{U}_2 \qquad (25)$$

where

$$\left(\frac{x_0}{e_0}\right)^2 + \left(\frac{x_1}{e_1}\right)^2 + \left(\frac{x_2}{e_2}\right)^2 = 1 \qquad (26)$$

If $e_0 = e_1 = e_2$, then the ellipsoid is a sphere with center **C** and radius $e_0$. If $e_0 = e_1 > e_2$, the ellipsoid is said to be an *oblate spheroid.* If $e_0 > e_1 = e_2$, the ellipsoid is said to be a *prolate spheroid.* The orthonormality of the axis directions and Equation (25) imply $x_i = \mathbf{U}_i \cdot (\mathbf{P} - \mathbf{C}).$ Substituting this into Equation (26) we obtain:

$$(\mathbf{P} - \mathbf{C})^T M (\mathbf{P} - \mathbf{C}) = 1 \qquad (27)$$

where $M = RDR^T,$ $R$ is an orthogonal matrix whose columns are $\mathbf{U}_0$, $\mathbf{U}_1$, and $\mathbf{U}_2$ and $D$ is a diagonal matrix whose diagonal entries are $1/e_0^2,$ $1/e_1^2$, and $1/e_2^2$.

The problem is to compute the distance from a point **Q** to the ellipsoid. It is sufficient to solve this problem in the coordinate system of the ellipsoid; that is, represent $\mathbf{Q} = \mathbf{C} + y_0 \mathbf{U}_0 + y_1 \mathbf{U}_1 + y_2 \mathbf{U}_2.$ The distance from **Q** to the closest point **P** on the ellipsoid as defined by Equation (25) is the same as the distance from **Y** = $(y_0, y_1, y_2)$ to the closest point **X** = $(x_0, x_1, x_2)$ on the standard ellipsoid of Equation (26).

As in the 2D ellipse problem we may additionally use symmetry to simplify the construction. It is sufficient to consider the case when $(y_0, y_1, y_2)$ is in the first octant: $y_0 \geq 0$, $y_1 \geq 0$, and $y_2 \geq 0$.

The Closest Point's Normal is Directed Toward the Query Point

A parameterization of the standard ellipsoid is $\mathbf{X}(\theta, \phi) = (eo \cos \theta \sin \phi, e_1 \sin \theta \sin \phi, e_2 \cos \phi)$ for $\theta \in [0, 2\pi)$ and $\phi \in [0, \pi]$. The squared distance from **Y** to any point on the ellipsoid is

$$F(\theta, \phi) = |\mathbf{X}(\theta, \phi) - \mathbf{Y}|^2 \qquad (28)$$

This is a nonnegative, doubly periodic, and differentiable function; it must have a global minimum occurring at angles for which the first-order partial derivatives are zero,

$$\frac{\partial F}{\partial \theta} = 2(\mathbf{X}(\theta, \phi) - \mathbf{Y}) \cdot \frac{\partial \mathbf{X}}{\partial \theta} = 0, \quad \frac{\partial F}{\partial \phi} = 2(\mathbf{X}(\theta, \phi) - \mathbf{Y}) \cdot \frac{\partial \mathbf{X}}{\partial \phi} = 0 \quad (29)$$

For the derivatives to be zero, the vector $(\mathbf{X}(\theta, \phi) - \mathbf{Y})$ must be perpendicular to the tangent vectors $\partial \mathbf{X}/\partial \theta$ and $\partial \mathbf{X}/\partial \phi$. This implies that the vector from **Y** to the closest ellipsoid point **X** must be normal to the surface at **X**. Using the implicit form of the ellipsoid, namely, $G(x_0, x_1, x_2) = (x_0/e_0)^2 + (x_1/e_1)^2 + (x_2/e_2)^2 - 1$, half the gradient of $G(x_0, x_1, x_2)$ is a normal vector to the ellipsoid at $(x_0, x_1, x_2)$, so we have $(y_0, y_1, y_2) - (x_0, x_1, x_2) = t\nabla G(x_0, x_1, x_2)/2$ $= t(x_0/e_0^2, x_1/e_1^2, x_2/e_2^2)$ for some scalar $t$, or

$$y_0 = x_0\left(1 + \frac{t}{e_0^2}\right), y_1 = x_1\left(1 + \frac{t}{e_1^2}\right), y_2 = x_2\left(1 + \frac{t}{e_2^2}\right) \qquad (30)$$

If $(y_0, y_1, y_2)$ is outside the ellipsoid, it is necessary that $t > 0$. If $(y_0, y_1, y_2)$ is inside the ellipsoid, it is necessary that $t > 0$. If $(y_0, y_1, y_2)$ is already on the ellipsoid, then $t = 0$ and the distance is zero.

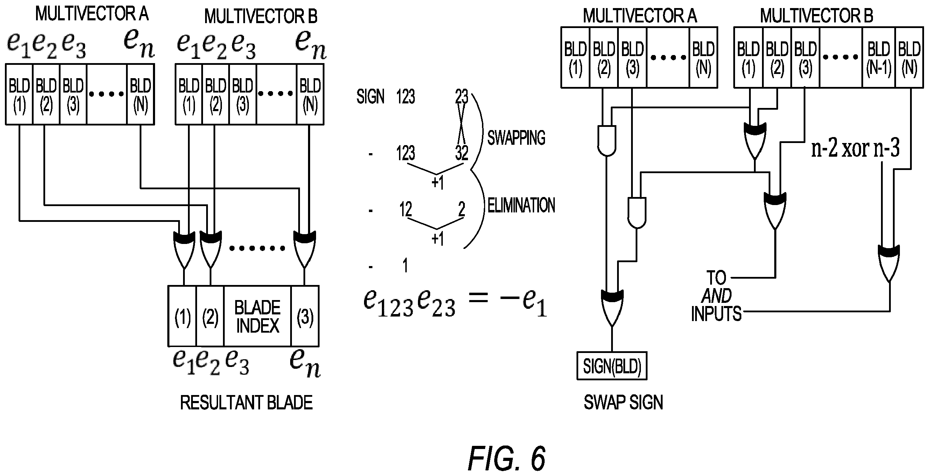

However, the Eberly formalization is computationally inefficient, exposes variable latency, and creates larger round-off uncertainties. On the contrary, by exploiting the Multivector operation, this process can be accelerated at low level as shown in FIG. 6, which illustrates a basis blades computation using bit representations according to an example. After this intense computation, the set of 4-tuples $\Phi$ describes the approximations (or contacts when $|\delta_{\{i,j\}}| < \alpha$ below a confidence margin threshold) between the gripper and the objects is denoted as

$$\Phi := \left\{\left(x_i, y_j, k, \delta_{\{i,j\}}\right)_1, ..., \left(x_{i'}, y_{j'}, k', \delta_{\{i',j'\}}\right)_n\right\}.$$

With $\Phi$ it is possible to compute the grasping quality $0 \leq \Delta(\Phi, \Theta(t))$ as a numeric index ranking each grasping configuration. Grasp quality metrics are task and gripper specific, and the most meaningful metric for the task should be used. In this way, grasps can be ranked depending on their stability, resistance to acceleration or external disturbances, robustness to exact finger placement and replacement, redundancy of contacts, etc. The appropriate grasping configuration to use may be selected based on the grasp quality metrics (and the associated drivers of the robot driven to obtain the selected grasping configuration).

Accordingly, processing circuitry in the robot may perform the geometric primitive transformation for the URDFs and the hierarchical computation using constructive directed distance via Boolean operators as described by the GA-CSG Robot-model Decomposition Algorithm 1 above.

Regarding computational primitives, hierarchy, and polymorphism: operations such as intersections and directed distance calculation among geometric primitives can be implemented in a case-by-case basis and still provide generality via object-oriented polymorphism. Concretely, all primitive objects derive from an abstract class *Primitive* $\varphi$. This primitive defines multiple methods for operations and desired behavior. Then, for each type of primitive (e.g., Point $\Xi$, Circle $\Phi$, *Plane* $\psi$, *Cylinder* $\theta$, *Sphere* $\Theta$, etc.), a class is created deriving (<) from the *Primitive* class, denoted as $\psi <$

$\varphi$. Now, the intersection $\Lambda$ or direct distance $\dot{-}$ method invocation between any primitive can be computed inside each operand's class implementation. For example, the intersection of a Plane $\psi$ and a Sphere $\Theta$ is a commutable operator (hence a single implementation is called on any of the two polymorphic methods) eventually resulting in another primitive (circle $\Phi$ or point $\Xi$) or well an empty object $\varnothing$ in case their subspaces are disjoint (not sharing any point), as: $\Theta \wedge \psi = \psi \wedge \Theta = \{\Phi, \Xi, \varnothing\}$. Notice that $\Theta_\Lambda$ is a virtual method that takes care of a specific geometric approach (for either intersection or directed distances) and potential hardware acceleration capabilities (CPU-vectorization, VPU, GPU, etc.) in the host system.

It is possible to decompose the geometric operation into Multiply-accumulate (MAC) operations and derive performance benefits. One optimization value obtained using Geometric algebra originate from three operations used above: 1) Rotations & kinematic chains, 2) Directed distance computation, and 3) Quadric Intersections.

**Rotation and Kinematic chains:** A projective geometry algorithm may be used in three-dimensional space represented by using 4X4 matrices in linear algebra. Every rotation matrix is orthonormal based on the matrix components it is a suboptimal representation, having a symmetric or antisymmetric value in transposed positions, and having zero values on 6:16 -37% of the matrix. A general rotation around an arbitrary axis can be computed using the Rodriguez formula as:

$$R = \begin{pmatrix} k_x k_x (1-c) + c & k_z k_x (1-c) + k_z s & k_x k_z (1-c) + k_y s & 0 \\ k_y k_x (1-c) + k_z s & k_z k_x (1-c) + c & k_y k_z (1-c) + k_x s & 0 \\ k_z k_x (1-c) - k_y s & k_z k_x (1-c) + k_x s & k_z k_z (1-c) + c & 0 \\ 0 & 0 & 0 & 1 \end{pmatrix}$$

where c = *cos* $\theta$ & s = *sin* $\Theta$

which uses 33 MAC operations, while the simplest kinematic chain of two consecutive general rotations R1*R2 use 130 MAC operations:

$$\text{MAC} = 33 + 33 + 16*4 = 130$$

$$R = \begin{pmatrix} k_x k_x (1-c) + c & k_z k_x (1-c) - k_z s & k_x k_z (1-c) + k_y s & 0 \\ k_y k_x (1-c) + k_z s & k_z k_x (1-c) + c & k_y k_z (1-c) - k_x s & 0 \\ k_z k_x (1-c) - k_y s & k_z k_x (1-c) - k_x s & k_z k_z (1-c) + c & 0 \\ 0 & 0 & 0 & 1 \end{pmatrix}$$

$$\begin{pmatrix} k_x k_x (1-c) + c & k_z k_x (1-c) - k_z s & k_x k_z (1-c) + k_y s & 0 \\ k_y k_x (1-c) + k_z s & k_z k_x (1-c) + c & k_y k_z (1-c) - k_x s & 0 \\ k_z k_x (1-c) - k_y s & k_z k_x (1-c) - k_x s & k_z k_z (1-c) + c & 0 \\ 0 & 0 & 0 & 1 \end{pmatrix}$$

where c = *cos* $\theta$ & s = *sin* $\theta$

In contrast, using Geometric algebra, rotations are represented by a bivector $R_1 = c_1 + s_1(l_x e_{23} + l_y e_{13} + l_z e_{12})$ and $R_2 = c_2 + s_2(l_{2x} e_{23} + l_{2y} e_{13} + l_{2z} e_{12})$. Their multiplication $R_1 R_2$ only uses 22 MAC operations in the worst-case scenario, thereby reducing the number of computations by almost 590% (a factor of 6) for kinematic chains.

**Distance computation:** Assuming the quadric described by the equation is:

$$ax^2 + 2bxy + 2cxz + 2dxw + ey^2 + 2fyz + 2gyw + hz^2 + 2izw + jw^2 = 0.$$

20 MAC operations are used to evaluate this equation having (x, y, z), this normally mapped using Linear algebra into a 4x4 matrix representation denoted as

$$\mathbf{x}^t Q \mathbf{x} = 0,$$

Where the vectors X and the Matrix Q (quadric) are represented as:
where

$$x = \begin{bmatrix} x \\ y \\ z \\ w \end{bmatrix}, x^t = [\, x \quad y \quad z \quad w \,], and\; Q = \begin{bmatrix} a & b & c & d \\ b & e & f & g \\ c & f & h & i \\ d & g & i & j \end{bmatrix}$$

In this representation, 20 MAC operations are used to evaluate the equation for a given (x, y, z, 1) input point. In geometric algebra the Quadric is given by:

$$\frac{(x-h)^2}{a^2} + \frac{(y-k)^2}{b^2} + \frac{(z-l)^2}{c^2} = 1$$

$$\frac{x^2 - 2xh - h^2}{a^2} + \frac{y^2 - 2yk - k^2}{b^2} + \frac{z^2 - 2zl - l^2}{c^2} = 1$$

$$H_1 = \frac{he_1}{a^2} + \frac{e_{ox}}{a^2} + \frac{h^2 e_{\infty x}}{2a^2}. \quad H_2 = \frac{ke_2}{b^2} + \frac{e_{oy}}{b^2} + \frac{k^2 e_{\infty y}}{2b^2}. \quad H_3 = \frac{le_3}{c^2} + \frac{e_{oz}}{c^2} + \frac{l^2 e_{\infty x}}{2c^2}.$$

$$X_1 = xe_1 + \frac{1}{2}x^2 e_{\infty x} + e_{ox} \quad X_2 = ye_2 + \frac{1}{2}y^2 e_{\infty y} + e_{oy} \quad X_3 = ze_3 + \frac{1}{2}z^2 e_{\infty z} + e_{oz}$$

$$H_1 \cdot X_1 + H_2 \cdot X_2 + H_3 \cdot X_3 + 1 = 0$$

In contrast, using Geometric algebra, since the axis-aligned quadrics are used only 9 MAC operations are used, and rotations are handled efficiently as described in the previous section, thereby reducing the number of computations by almost 222%.

**Intersections:** An iterative algorithm may be used to compute the intersections of the quadrics in an efficient implementation. By using geometric algebra, the intersection complexity is of the order log(n) multiplied by the MAC operations used to evaluate each quadric (20MAC) and the evaluation of the derivative (16MAC operations) described in the previous section.

A solution based on Geometric algebra is closed form, uses less than 72 MAC Operations, and is accelerated at the bit level when operating over the blades. This not only speeds up processing but is also energy efficiency and has a low-silicon footprint. Here, every bit represents the presence or absence of one of the bases, and they are always in incremental order. An XOR gate computes the resulting blade with just one instruction. For any Clifford product, the resultant sign is computed. To show how to do this, an example is presented in which the basis is represented using the 8-bits integers **M** and **N.**
*for*

$$i = 1, \cdots, n$$
$$tM = tM \oplus (M >> i)$$

Where $n = p + q$ and *tM* start from 0, *tM* = 0. Then the sign is given by:

$$sign = \left\{ \begin{array}{ll} -1 & if \quad parity((tM \cap N) \oplus ((M \cap N) >> p)) \\ 1 & else \end{array} \right.$$

This algorithm to compute the sign may be mapped to logical gates, so may avoid the use of cycles; the sign can be computed using a single instruction.

Now to compute the **Dot** product:

$$A \cdot B = \left\{ \begin{array}{ll} A*B & if \quad ((M \cap N) = M) or ((M \cap N) = N) \\ 0 & else \end{array} \right.$$

And wedge products:

$$A \wedge B = \left\{ \begin{array}{ll} A*B & if \quad ((M \cap N) = 0) \\ 0 & else \end{array} \right.$$

Multiplying 9 elements by 9 elements of the other quadric consumes fewer than 72 MAC operations because there are many M and N bases that intersect in at least a bit saving many MAC operations. This means that the Geometric algebra-based algorithm disclosed herein is at least log(n) faster, where n represents the dimension of the quadric.

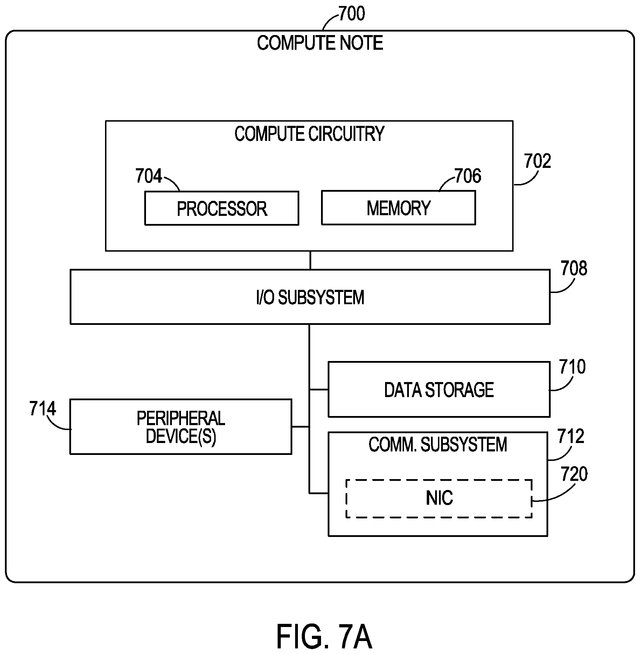

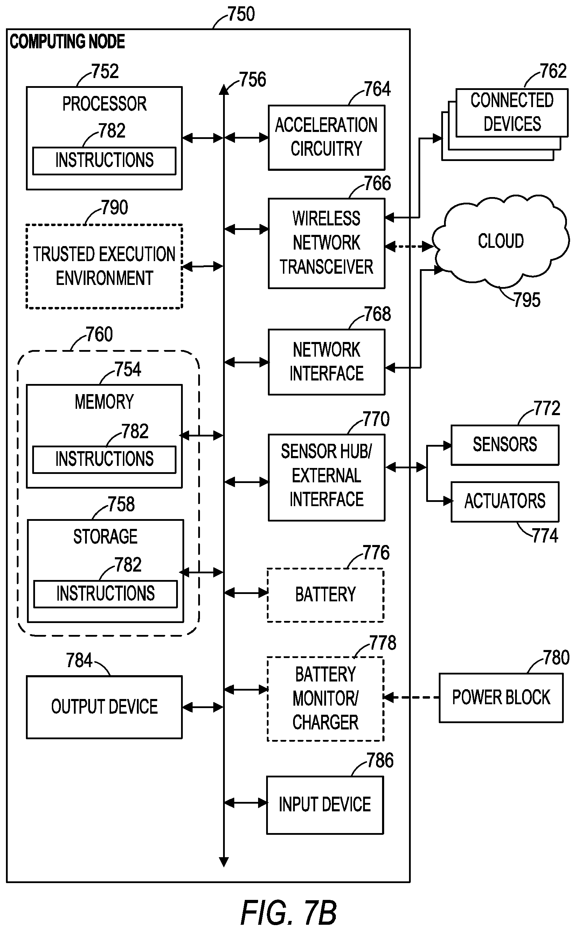

In further examples, any of the compute nodes or devices (e.g., robots) may be fulfilled based on the components depicted in FIGS. 7A and 7B. Respective compute nodes may be embodied as a type of device, appliance, computer, or other "thing" capable of communicating with other edge, networking, or endpoint components. For example, a compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 7A, a compute node 700 includes a compute engine (also referred to herein as "compute circuitry") 702, an input/output (I/O) subsystem 708, data storage 710, a communication circuitry subsystem 712, and, optionally, one or more peripheral devices 714. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 700 may be embodied as any type of engine, device, or collection of devices capable of performing various compute functions. In some examples, the compute node 700 may be embodied as a single device such as an integrated circuit, an embedded system, a field-programmable gate array (FPGA), a system-on-a-chip (SOC), or other integrated system or device. In the illustrative example, the compute node 700 includes or is embodied as a processor 704 and a memory 706. The processor 704 may be embodied as any type of processor capable of performing the functions described herein (e.g., executing an application). For example, the processor 704 may be embodied as a multi-core processor(s), a microcontroller, a processing unit, a specialized or special purpose processing unit, or other processor or processing/controlling circuit.

In some examples, the processor 704 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 704 may work in coordination with each other to execute many types of operations and instructions within and on behalf of the compute node 700.

The memory 706 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel® 3D XPoint™ memory), or other byte addressable write-in-place nonvolatile memory devices. The memory device may refer to the die itself and/or to a packaged memory product. In some examples, 3D crosspoint memory (e.g., Intel® 3D XPoint™ memory) may comprise a transistor-less stackable cross point architecture in which memory cells sit at the intersection of word lines and bit lines and are individually addressable and in which bit storage is based on a change in bulk resistance. In some examples, all or a portion of the memory 706 may be integrated into the processor 704. The memory 706 may store various software and data used during operation such as one or more applications, data operated on by the application(s), libraries, and drivers.

The compute circuitry 702 is communicatively coupled to other components of the compute node 700 via the I/O subsystem 708, which may be embodied as circuitry and/or components to facilitate input/output operations with the compute circuitry 702 (e.g., with the processor 704 or the main memory 706) and other components of the compute circuitry 702. For example, the I/O subsystem 708 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 708 may form a portion of a system-on-a-chip (SoC) and be incorporated, along with one or more of the processor 704, the memory 706, and other components of the compute circuitry 702, into the compute circuitry 702.

The one or more illustrative data storage devices 710 may be embodied as any type of devices configured for short-term or long-term storage of data such as, for example, memory devices and circuits, memory cards, hard disk drives, solid-state drives, or other data storage devices. Individual data storage devices 710 may include a system partition that stores data and firmware code for the data storage device 710. Individual data storage devices 710 may also include one or more operating system partitions that store data files and executables for operating systems depending on, for example, the type of compute node 700.

The communication circuitry 712 may be embodied as any communication circuit, device, or collection thereof, capable of enabling communications over a network between the compute circuitry 702 and another compute device (e.g., a gateway of an implementing computing system). The communication circuitry 712 may be configured to use any one or more communication technology (e.g., wired or wireless communications) and associated protocols (e.g., a cellular networking protocol such a 3GPP 4G or 8G standard, a wireless local area network protocol such as IEEE 802.11/Wi-Fi®, a wireless wide area network protocol, Ethernet, Bluetooth®, Bluetooth Low Energy, a IoT protocol such as IEEE 802.15.4 or ZigBee®, low-power wide-area network (LPWAN) or low-power wide-area (LPWA) protocols, etc.) to effect such communication.

The illustrative communication circuitry 712 includes a network interface controller (NIC) 720, which may also be referred to as a host fabric interface (HFI). The NIC 720 may be embodied as one or more add-in-boards, daughter cards, network interface cards, controller chips, chipsets, or other devices that may be used by the compute node 700 to connect with another compute device (e.g., a gateway node). In some examples, the NIC 720 may be embodied as part of a system-on-a-chip (SoC) that includes one or more processors, or included on a multichip package that also contains one or more processors. In some examples, the NIC 720 may include a local processor (not shown) and/or a local memory (not shown) that are both local to the NIC 720. In such examples, the local processor of the NIC 720 may be capable of performing one or more of the functions of the compute circuitry 702 described herein. Additionally, or alternatively, in such examples, the local memory of the NIC 720 may be integrated into one or more components of the client compute node at the board level, socket level, chip level, or other levels.

Additionally, in some examples, a respective compute node 700 may include one or more peripheral devices 714. Such peripheral devices 714 may include any type of peripheral device found in a compute device or server such as audio input devices, a display, other input/output devices, interface devices, and/or other peripheral devices, depending on the particular type of the compute node 700. In further examples, the compute node 700 may be embodied by a respective compute node (whether a client, gateway, or aggregation node) in a computing system or like forms of appliances, computers, subsystems, circuitry, or other components.

In a more detailed example, FIG. 7B illustrates a block diagram of an example of components that may be present in a computing node 750 for implementing the techniques (e.g., operations, processes, methods, and methodologies) described herein. This computing node 750 provides a closer view of the respective components of node 700 when implemented as or as part of a computing device (e.g., as a mobile device, a base station, server, gateway, etc.). The computing node 750 may include any combinations of the hardware or logical components referenced herein, and it may include or couple with any device usable with a communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the computing node 750, or as components otherwise incorporated within a chassis of a larger system.

The computing node 750 may include processing circuitry in the form of a processor 752, which may be a microprocessor, a multi-core processor, a multithreaded processor, an ultralow voltage processor, an embedded processor, an xPU/DPU/IPU/NPU, special purpose processing unit, specialized processing unit, or other known processing elements. The processor 752 may be a part of a system on a chip (SoC) in which the processor 752 and other components are formed into a single integrated circuit, or a single package, such as the Edison™ or Galileo™ SoC boards from Intel Corporation, Santa Clara, California. As an example, the processor 752 may include an Intel® Architecture Core™ based CPU processor, such as a Quark™, an Atom™, an i3, an i5, an i7, an i9, or an MCU-class processor, or another such processor available from Intel®. However, any number other processors may be used, such as available from Advanced Micro Devices, Inc. (AMD®) of Sunnyvale, California, a MIPS®-based design from MIPS Technologies, Inc. of Sunnyvale, California, an ARM®-based design licensed from ARM Holdings, Ltd. or a customer thereof, or their licensees or adopters. The processors may include units such as an A5-A13 processor from Apple® Inc., a Snapdragon™ processor from Qualcomm® Technologies, Inc., or an OMAP™ processor from Texas Instruments, Inc. The processor 752 and accompanying circuitry may be provided in a single socket form factor, multiple socket form factor, or a variety of other formats, including in limited hardware configurations or configurations that include fewer than all elements shown in FIG. 7B.

The processor 752 may communicate with a system memory 754 over an interconnect 756 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 758 may also couple to the processor 752 via the interconnect 756. In an example, the storage 758 may be implemented via a solid-state disk drive (SSDD). Other devices that may be used for the storage 758 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 758 may be on-die memory or registers associated with the processor 752. However, in some examples, the storage 758 may be implemented using a micro hard disk drive (HDD). Further, any number of new technologies may be used for the storage 758 in addition to, or instead of, the technologies described, such resistance change memories, phase change memories, holographic memories, or chemical memories, among others.

The components may communicate over the interconnect 756. The interconnect 756 may include any number of technologies, including industry standard architecture (ISA), extended ISA (EISA), peripheral component interconnect (PCI), peripheral component interconnect extended (PCIx), PCI express (PCIe), or any number of other technologies. The interconnect 756 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 756 may couple the processor 752 to a transceiver 766, for communications with the connected devices 762. The transceiver 766 may use any number of frequencies and protocols, such as 2.4 Gigahertz (GHz) transmissions under the IEEE 802.15.4 standard, using the Bluetooth® low energy (BLE) standard, as defined by the Bluetooth® Special Interest Group, or the ZigBee® standard, among others. Any number of radios, configured for a particular wireless communication protocol, may be used for the connections to the connected devices 762. For example, a wireless local area network (WLAN) unit may be used to implement Wi-Fi® communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 766 (or multiple transceivers) may communicate using multiple standards or radios for communications at a different range. For example, the computing node 750 may communicate with close devices, e.g., within about 10 meters, using a local transceiver based on Bluetooth Low Energy (BLE), or another low power radio, to save power. More distant connected devices 762, e.g., within about 70 meters, may be reached over ZigBee® or other intermediate power radios. Both communications techniques may take place over a single radio at different power levels or may take place over separate transceivers, for example, a local transceiver using BLE and a separate mesh transceiver using ZigBee®.

A wireless network transceiver 766 (e.g., a radio transceiver) may be included to communicate with devices or services in the cloud 795 via local or wide area network protocols. The wireless network transceiver 766 may be a low-power wide-area (LPWA) transceiver that follows the IEEE 802.15.4, or IEEE 802.15.4g standards, among others. The computing node 750 may communicate over a wide area using LoRaWAN™ (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 766, as described herein. For example, the transceiver 766 may include a cellular transceiver that uses spread spectrum (SPA/SAS) communications for implementing high-speed communications. Further, any number of other protocols may be used, such as Wi-Fi® networks for medium speed communications and provision of network communications. The transceiver 766 may include radios that are compatible with any number of 3GPP (Third Generation Partnership Project) specifications, such as Long Term Evolution (LTE) and 7th Generation (5G) communication systems, discussed in further detail at the end of the present disclosure. A network interface controller (NIC) 768 may be included to provide a wired communication to nodes of the cloud 795 or to other devices, such as the connected devices 762 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 768 may be included to enable connecting to a second network, for example, a first NIC 768 providing communications to the cloud over Ethernet, and a second NIC 768 providing communications to other devices over another type of network.

Given the variety of types of applicable communications from the device to another component or network, applicable communications circuitry used by the device may include or be embodied by any one or more of components 764, 766, 768, or 770. Accordingly, in various examples, applicable means for communicating (e.g., receiving, transmitting, etc.) may be embodied by such communications circuitry.

The computing node 750 may include or be coupled to acceleration circuitry 764, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific computing tasks for service management and service operations discussed elsewhere in this document.

The interconnect 756 may couple the processor 752 to a sensor hub or external interface 770 that is used to connect additional devices or subsystems. The devices may include sensors 772, such as accelerometers, level sensors, flow sensors, optical light sensors, camera sensors, temperature sensors, global navigation system (e.g., GPS) sensors, pressure sensors, barometric pressure sensors, and the like. The hub or interface 770 further may be used to connect the computing node 750 to actuators 774, such as power switches, valve actuators, an audible sound generator, a visual warning device, and the like.

In some optional examples, various input/output (I/O) devices may be present within or connected to, the computing node 750. For example, a display or other output device 784 may be included to show information, such as sensor readings or actuator position. An input device 786, such as a touch screen or keypad may be included to accept input. An output device 784 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the computing node 750. A display or console hardware, in the context of the present system, may be used to provide output and receive input of a computing system; to manage components or services of a computing system; identify a state of a computing component or service; or to conduct any other number of management or administration functions or service use cases.

A battery 776 may power the computing node 750, although, in examples in which the computing node 750 is mounted in a fixed location, it may have a power supply coupled to an electrical grid, or the battery may be used as a backup or for temporary capabilities. The battery 776 may be a lithium ion battery, or a metal-air battery, such as a zinc-air battery, an aluminumair battery, a lithium-air battery, and the like.

A battery monitor/charger 778 may be included in the computing node 750 to track the state of charge (SoCh) of the battery 776, if included. The battery monitor/charger 778 may be used to monitor other parameters of the battery 776 to provide failure predictions, such as the state of health (SoH) and the state of function (SoF) of the battery 776. The battery monitor/charger 778 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 778 may communicate the information on the battery 776 to the processor 752 over the interconnect 756. The battery monitor/charger 778 may also include an analog-to-digital (ADC) converter that enables the processor 752 to directly monitor the voltage of the battery 776 or the current flow from the battery 776. The battery parameters may be used to determine actions that the computing node 750 may perform, such as transmission frequency, mesh network operation, sensing frequency, and the like.

A power block 780, or other power supply coupled to a grid, may be coupled with the battery monitor/charger 778 to charge the battery 776. In some examples, the power block 780 may be replaced with a wireless power receiver to obtain the power wirelessly, for example, through a loop antenna in the computing node 750. A wireless battery charging circuit, such as an LTC4020 chip from Linear Technologies of Milpitas, California, among others, may be included in the battery monitor/charger 778. The specific charging circuits may be selected based on the size of the battery 776, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 758 may include instructions 782 in the form of software, firmware, or hardware commands to implement the techniques described herein. Although such instructions 782 are shown as code blocks included in the memory 754 and the storage 758, it may be understood that any of the code blocks may be replaced with hardwired circuits, for example, built into an application specific integrated circuit (ASIC).

In an example, the instructions 782 provided via the memory 754, the storage 758, or the processor 752 may be embodied as a non-transitory, machine-readable medium 760 including code to direct the processor 752 to perform electronic operations in the computing node 750. The processor 752 may access the non-transitory, machine-readable medium 760 over the interconnect 756. For instance, the non-transitory, machine-readable medium 760 may be embodied by devices described for the storage 758 or may include specific storage units such as optical disks, flash drives, or any number of other hardware devices. The non-transitory, machine-readable medium 760 may include instructions to direct the processor 752 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 782 on the processor 752 (separately, or in combination with the instructions 782 of the machine readable medium 760) may configure execution or operation of a trusted execution environment (TEE) 790. In an example, the TEE 790 operates as a protected area accessible to the processor 752 for secure execution of instructions and secure access to data. Various implementations of the TEE 790, and an accompanying secure area in the processor 752 or the memory 754 may be provided, for instance, through use of Intel® Software Guard Extensions (SGX) or ARM® TrustZone® hardware security extensions, Intel® Management Engine (ME), or Intel® Converged Security Manageability Engine (CSME). Other aspects of security hardening, hardware roots-of-trust, and trusted or protected operations may be implemented in the computing node 750 through the TEE 790 and the processor 752.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together (e.g., including over a wire, over a network, using one or more platforms, wirelessly, via a software component, or the like), comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

Additional examples of the presently described method, system, and device embodiments include the following, non-limiting implementations. Each of the following non-limiting examples may stand on its own or may be combined in any permutation or combination with any one or more of the other examples provided below or throughout the present disclosure.

Each of these non-limiting examples may stand on its own, or may be combined in various permutations or combinations with one or more of the other examples.

As used herein, the following definitions are provided:

Object-agnostic: invariant to the type, class, shape or material pertaining to an object during grasp planning.

Grasping points: a subset of points on both the robot end-effector and object for the planning, evaluation and execution of grasp.

Geometric algebra (also known as a real Clifford algebra): an extension of elementary algebra to work with geometrical objects such as vectors. Geometric algebra is built out of two fundamental operations, addition and the geometric product. Multiplication of vectors results in higher-dimensional objects called multivectors. Compared to other formalisms for manipulating geometric objects, geometric algebra is noteworthy for supporting vector division and addition of objects of different dimensions.

End-to-end robot grasping and manipulation skills: software capabilities that take care of all computation, sensing, and representation tasks in order to grasp and manipulate objects in the workspace of a robot.

6D: Six degrees of freedom (DOF), which is location (x,y,z), and orientation in each of the axis. A robot end effector is the device at the end of a robotic arm that is designed to interact with the environment. The exact nature of this device depends on the application of the robot.

Grasp planning: finding stable grasps on 3D objects is considered to be one of the hardest problems in robotics, since many parameters such as hand kinematics, object geometry, material properties and forces as well as obstacles in the environment have to be taken into account. This results in a high-dimensional space of possible grasps that cannot be searched exhaustively. One solution is grasp planning in simulation. This means that models of the robot hand and the object are loaded into a simulation environment to test various grasps on the object. The testing process is organized as follows: the robot hand is placed at different starting positions and orientations relative to the object. Then the hand approaches the object. Once collision between hand and object is detected, the fingers of the hand close until all finger links have contact with the object or cannot move any more. The coordinates of the contact points are used to calculate a grasp stability criterion. This way a multitude of different candidate grasps can be automatically tested and rated. However, collision detection and stability testing are computationally intensive.

Considering the complexity of grasp planning, the heuristics used for generating starting positions and orientations of the hand are of interest. In order to reduce the complexity of grasp planning heuristics are determined that maximize the fraction of stable grasps among the generated candidate grasps.

Oriented distance: in mathematics and its applications, the signed distance function (or oriented distance function) is the orthogonal distance of a given point x to the boundary of a set $\Omega$ in a metric space, with the sign determined by whether or not x is in the interior of $\Omega$ The function has positive values at points x inside $\Omega$, it decreases in value as x approaches the boundary of $\Omega$ where the signed distance function is zero, and it takes negative values outside of $\Omega$. However, the alternative convention is also sometimes taken instead (i.e., negative inside $\Omega$ and positive outside).

Free-form object: an object often assumed to be composed of one or more non-planar, non-quadric surfaces ('free-form surface'). A roughly equivalent characterization is a free-form surface has a well-defined surface normal that is continuous almost everywhere except at vertices, edges and cusps.

Constructive Solid Geometry: a technique used in solid modeling. Constructive solid geometry allows a modeler to create a complex surface or object by using Boolean operators to combine simpler objects, potentially generating visually complex objects by combining a few primitive ones.

Grasp quality: the correct grasp of objects is one aspect for the right fulfillment of a given task. Obtaining a good grasp requires algorithms to automatically determine proper contact points on the object as well as proper hand configurations, especially when dexterous manipulation is desired, and the quantification of a good grasp requires the definition of suitable grasp quality measures. The quality measures are classified into two groups according to the main aspect they evaluate: location of contact points on the object and hand configuration. The approaches that combine different measures from the two previous groups to obtain a global quality measure are also reviewed, as well as some measures related to human hand studies and grasp performance. Several examples are presented to illustrate and compare the performance of the reviewed measures.

Examples

Example 1 is a system comprising: a robot; processing circuitry; and memory including instructions, which when executed by the processing circuitry cause the processing circuitry to: generate a linked Boolean composition of geometric primitives that composes the robot; logically combine signed distances arising from the geometric primitives to model kinematic composition of links and joints of the robot for grasping and manipulation by the robot, the signed distances spatially and sequentially arranged by directed distances; and use the model to determine a grasping configuration to grasp a grasping target when targeting an object and grasp the grasping target based on the grasping configuration.

In Example 2, the subject matter of Example 1 includes, wherein the geometric primitives include oriented-planes and ellipsoids and logical combinations include union, subtraction, negation, and intersection.

In Example 3, the subject matter of Examples 1-2 includes, wherein the instructions further cause the processing circuitry to determine directed distances between points, the points selected from a point at infinity and a quadric that models a cylindrical surface associated with the robot.

In Example 4, the subject matter of Examples 1-3 includes, wherein the instructions further cause the processing circuitry to model a gripper of the robot, and extrusions and implicit curves, as generalized quadratics.

In Example 5, the subject matter of Examples 1-4 includes, wherein the instructions further cause the processing circuitry to decompose a gripper of the robot into closed polytopes and quadrics, and turn each robot kinematic element into a collection of interconnected geometric primitives.

In Example 6, the subject matter of Examples 1-5 includes, wherein the instructions further cause the processing circuitry to, during an off-line phase of a high-performance grasping computation process, transform frames and meshes describing a three dimensional robot model into a geometric collection of primitives with associated directed distances, the geometric collection of primitives with associated directed distances stored in a non-volatile memory for use in general tasks.

In Example 7, the subject matter of Example 6 includes, wherein the instructions further cause the processing circuitry to, during an off-line phase, extract and fit primitives for each mesh in a Universal Robot Description Format (URDF) of the robot model, the extraction and fitting of each mesh comprising: determining a geometric centroid of the mesh, recentering all vertices of the mesh, determining a bounding box that spans a minimal volume for the mesh to define clipping-oriented planes, and determining a bounding ellipsoid that constrains only a pair of axes with minimal spans in the bounding box, and determining bounding ellipsoids for non-overlapping pairs of axes.

In Example 8, the subject matter of Example 7 includes, wherein the instructions further cause the processing circuitry to spawn sorted primitives during the off-line phase for each joint set in the URDF, the spawning for each joint set comprising: storing an implicit transformation for the bounding box, and store a center of each ellipsoid and main axes in decreasing length order to provide minimal computation when evaluating directed distances.

In Example 9, the subject matter of Example 8 includes, wherein the instructions further cause the processing circuitry to determine a noise and quantization robust directed margin radii during the off-line phase for each joint set in the URDF, the spawning for each joint set comprising for all vertices in the joint set, computing a minimal distance to a surface of each of the planes and ellipsoid primitives and sorting the minimal distances progressively in a list to form a distribution and compute a cut-off radius by a target percentile.

In Example 10, the subject matter of Example 9 includes, wherein the instructions further cause the processing circuitry to, during the off-line phase: verify viability of a transformation of each robot model to form a robot link through computation of a Kurtosis of the distribution, in response to a determination that the Kurtosis is greater than 0 and less than 0.5, provide a warning to a user, and in response to a determination that the Kurtosis is greater than 0.5, abort the transformation of the robot model and indicate that the robot model is unable to be transformed.

In Example 11, the subject matter of Example 10 includes, wherein the instructions further cause the processing circuitry to, during the off-line phase, sort the robot links by volume of an associated bounding box in descending order.

In Example 12, the subject matter of Examples 1-11 includes, wherein the instructions further cause the processing circuitry to, during an on-line phase of a high-performance grasping computation process: compute forward kinematics of links from a Universal Robot Description Format (URDF) determined during an off-line phase and an instantaneous configuration of the robot, and select, via a bounding box filter, a subset of geometric primitives close to objects as active geometric primitives based on a 6 dimensional state of each of the links.

In Example 13, the subject matter of Example 12 includes, wherein the instructions further cause the processing circuitry to, during an on-line phase of a high-performance grasping computation process: determine the grasping target based on at least one of: model-less using raw results of range sensing, from a plurality of sensors, without added attributes, or model-based using a computer-aided design (CAD) or computer-aided manufacturing (CAM) model in which all vertices are collected, polygons are subdivided, and implicit curves and surfaces evaluated, abstract and subsample, by a point cloud, a source of the grasping target with a radius set to half a repeatability of a gripper of the robot based on the object grasp, obtain a mapping, for each point in the point cloud, of a point on a surface link of the gripper at a distance away from a surface point of the grasping target, and determine approximations between the gripper and the grasping target based on an x and y coordinate of each point, the distance, and the surface link.

In Example 14, the subject matter of Example 13 includes, wherein the instructions further cause the processing circuitry to, during an on-line phase of a high-performance grasping computation process: determine, from the approximations, grasping quality as a ranking of grasping configurations for the gripper, the ranking based on grasp quality metrics, and select one of the grasping configurations as the grasping configuration based on the grasp quality metrics.

Example 15 is a robot comprising: processing circuitry; and memory including instructions, which when executed by the processing circuitry cause the processing circuitry to: during an off-line phase, generate geometric primitives to model the robot, and during an on-line phase, select a grasping configuration based on a gripper of the robot and a grasping target, dependent on an x and y coordinate of each point of the geometric primitives, a distance between the point and the grasping target, and an associated surface link.

In Example 16, the subject matter of Example 15 includes, wherein the instructions further cause the processing circuitry to, during the off-line phase: transform frames and meshes describing a three dimensional robot model into a geometric collection of primitives with associated directed distances, extract and fit primitives for each mesh in a Universal Robot Description Format (URDF) of the robot model, the extraction and fitting of each mesh comprising: determining a geometric centroid of the mesh, recentering all vertices of the mesh, determining a bounding box that spans a minimal volume for the mesh to define clipping-oriented planes, and determining a bounding ellipsoid that constrains only a pair of axes with minimal spans in the bounding box, and determining bounding ellipsoids for non-overlapping pairs of axes, for each joint set in the URDF, computing, for all vertices in the joint set, a minimal distance to a surface of each of the planes and ellipsoid primitives and sorting the minimal distances progressively in a list to form a distribution and compute a cut-off radius by a target percentile, and verify viability of a transformation of each robot model to form a robot link through computation of a Kurtosis of the distribution, in response to a determination that the Kurtosis is greater than 0 and less than 0.5, provide a warning to a user, and in response to a determination that the Kurtosis is greater than 0.5, abort the transformation of the robot model and indicate that the robot model is unable to be transformed.

In Example 17, the subject matter of Example 16 includes, wherein the instructions further cause the processing circuitry to, during the on-line phase: compute forward kinematics of links from the URDF and an instantaneous configuration of the robot, and select, via a bounding box filter, a subset of geometric primitives close to objects as active geometric primitives based on a 6 dimensional state of each of the links.

In Example 18, the subject matter of Example 17 includes, wherein the instructions further cause the processing circuitry to, during the on-line phase: determine an object grasp based on at least one of: model-less using raw results of range sensing, from a plurality of sensors, without added attributes, or model-based using a computer-aided design (CAD) or computer-aided manufacturing (CAM) model in which all vertices are collected, polygons are subdivided, and implicit curves and surfaces evaluated, abstract and subsample, by a point cloud, a source of the grasping target with a radius set to a repeatability of the gripper based on the object grasp, obtain a mapping, for each point in the point cloud, of a point on a surface link of the gripper at a distance away from a surface point of the grasping target, and determine approximations between the gripper and the grasping target based on an x, y, and z coordinate of each point, the distance, and the surface link.

Example 19 is at least one machine-readable medium including instructions, which when executed by processing circuitry of a robot, cause the processing circuitry to perform operations to: during an off-line phase, generate geometric primitives to model the robot, and during an on-line phase: determine grasping configurations based on a gripper of the robot and a grasping target, dependent on an x and y coordinate of each point of the geometric primitives, a distance between the point and the grasping target, and an associated surface link, determine, based on grasp quality metrics, grasping quality as a ranking of the grasping configurations based on grasp quality metrics, and select, based on the ranking, one of the grasping configurations to use to grasp the grasping target.

In Example 20, the subject matter of Example 19 includes, wherein the instructions further cause the processing circuitry to, during the off-line phase: transform frames and meshes describing a three dimensional robot model into a geometric collection of primitives with associated directed distances, extract and fit primitives for each mesh in a Universal Robot Description Format (URDF) of the robot model, the extraction and fitting of each mesh comprising: determining a geometric centroid of the mesh, recentering all vertices of the mesh, determining a bounding box that spans a minimal volume for the mesh to define clipping-oriented planes, and determining a bounding ellipsoid that constrains only a pair of axes with minimal spans in the bounding box, and determining bounding ellipsoids for non-overlapping pairs of axes, for each joint set in the URDF, computing, for all vertices in the joint set, a minimal distance to a surface of each of the planes and ellipsoid primitives and sorting the minimal distances progressively in a list to form a distribution and compute a cut-off radius by a target percentile, and verify viability of a transformation of each robot model to form a robot link through computation of a Kurtosis of the distribution, in response to a determination that the Kurtosis is greater than 0 and less than 0.5, provide a warning to a user, and in response to a determination that the Kurtosis is greater than 0.5, abort the transformation of the robot model and indicate that the robot model is unable to be transformed.

In Example 21, the subject matter of Example 20 includes, wherein the instructions further cause the processing circuitry to, during the on-line phase: compute forward kinematics of links from the URDF and an instantaneous configuration of the robot, and select, via a bounding box filter, a subset of geometric primitives close to objects as active geometric primitives based on a 6 dimensional state of each of the links.

In Example 22, the subject matter of Example 21 includes, wherein the instructions further cause the processing circuitry to, during the on-line phase: determine an object grasp based on at least one of: model-less using raw results of range sensing, from a plurality of sensors, without added attributes, or model-based using a computer-aided design (CAD) or computer-aided manufacturing (CAM) model in which all vertices are collected, polygons are subdivided, and implicit curves and surfaces evaluated, abstract and subsample, by a point cloud, a source of the grasping target with a radius set to a repeatability of the gripper based on the object grasp, obtain a mapping, for each point in the point cloud, of a point on a surface link of the gripper at a distance away from a surface point of the grasping target, and determine approximations between the gripper and the grasping target based on an x and y coordinate of each point, the distance, and the surface link.

Example 23 is at least one machine-readable medium including instructions that, when executed by processing circuitry, cause the processing circuitry to perform operations to implement of any of Examples 1-22.

Example 24 is an apparatus comprising means to implement of any of Examples 1-22.

Example 25 is a system to implement of any of Examples 1-22.

Example 26 is a method to implement of any of Examples 1-22.

Such aspects of the subject matter may be referred to herein, individually and/or collectively, merely for convenience and without intending to voluntarily limit the scope of this application to any single aspect if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

The subject matter may be referred to herein, individually and/or collectively, by the term "embodiment" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, LTE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The Abstract of the Disclosure is submitted with the understanding that it will not be used to interpret or limit the scope or meaning of the claims. In addition, in the foregoing Detailed Description, it may be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A system (750) comprising:

   processing circuitry (752); and
   memory (754) including instructions (782), which when executed by the processing circuitry (752) cause the processing circuitry (752) to:

   generate geometric primitives that describe composition of a robot (202);
   model kinematic composition of links and joints of the robot (202) for grasping and manipulation by the robot (202) using the geometric primitives; and
use the model to determine a grasping configuration to grasp a target object and grasp the target based on the grasping configuration.

2. The system (750) of claim 1, wherein:

the geometric primitives are linked in a Boolean composition to describe the composition,
the geometric primitives include oriented-planes and ellipsoids and logical combinations include union, subtraction, negation, and intersection,
the kinematic composition is modeled using a logical combination of signed distances arising from the geometric primitives, and
the signed distances are spatially and sequentially arranged by directed distances.

3. The system (750) of claim 1 or 2, wherein the instructions further cause the processing circuitry to at least one of:

determine directed distances between points, the points selected from a point at infinity and a quadric that models a cylindrical surface associated with the robot (202),
model a gripper of the robot (202), and extrusions and implicit curves, as generalized quadratics, or decompose a gripper of the robot (202) into closed polytopes and quadrics, and turn each robot kinematic element into a collection of interconnected geometric primitives.

4. The system (750) of any one or more of claims 1-3, wherein the instructions further cause the processing circuitry to, during an off-line phase of a high-performance grasping computation process, transform frames and meshes describing a three dimensional robot model into a geometric collection of primitives with associated directed distances, the geometric collection of primitives with associated directed distances stored in a non-volatile memory for use in general tasks.

5. The system (750) of claim 4, wherein the instructions further cause the processing circuitry to, during an off-line phase, extract and fit primitives for each mesh in a Universal Robot Description Format "URDF" of the robot model, the extraction and fitting of each mesh comprising:

determining a geometric centroid of the mesh,
recentering all vertices of the mesh,
determining a bounding box that spans a minimal volume for the mesh to define clipping-oriented planes, and
determining a bounding ellipsoid that constrains only a pair of axes with minimal spans in the bounding box, and determining bounding ellipsoids for non-overlapping pairs of axes.

6. The system (750) of claim 5, wherein the instructions further cause the processing circuitry to spawn sorted primitives during the off-line phase for each joint set in the URDF, the spawning for each joint set comprising:

storing an implicit transformation for the bounding box, and
store a center of each ellipsoid and main axes in decreasing length order to provide minimal computation when evaluating directed distances.

7. The system (750) of claim 6, wherein the instructions further cause the processing circuitry to determine a noise and quantization robust directed margin radii during the off-line phase for each joint set in the URDF, the spawning for each joint set comprising for all vertices in the joint set, computing a minimal distance to a surface of each of the planes and ellipsoid primitives and sorting the minimal distances progressively in a list to form a distribution and compute a cut-off radius by a target percentile.

8. The system (750) of claim 7, wherein the instructions further cause the processing circuitry to, during the off-line phase:

verify viability of a transformation of each robot model to form a robot link through computation of a Kurtosis of the distribution,
in response to a determination that the Kurtosis is greater than 0 and less than 0.5, provide a warning to a user, and
in response to a determination that the Kurtosis is greater than 0.5, abort the transformation of the robot model and indicate that the robot model is unable to be transformed.

9. The system (750) of claim 8, wherein the instructions further cause the processing circuitry to, during the off-line phase, sort the robot links by volume of an associated bounding box in descending order.

10. The system (750) of any one or more of claims 1-9, wherein the instructions further cause the processing circuitry to, during an on-line phase of a high-performance grasping computation process:

   compute forward kinematics of links from a Universal Robot Description Format "URDF" determined during an off-line phase and an instantaneous configuration of the robot (202), and
   select, via a bounding box filter, a subset of geometric primitives close to objects as active geometric primitives based on a 6 dimensional state of each of the links.

11. The system (750) of claim 10, wherein the instructions further cause the processing circuitry to, during an on-line phase of a high-performance grasping computation process:
   determine the grasping target based on at least one of:

   model-less using raw results of range sensing, from a plurality of sensors, without added attributes, or
   model-based using a computer-aided design "CAD" or computer-aided manufacturing "CAM" model in which all vertices are collected, polygons are subdivided, and implicit curves and surfaces evaluated,
   abstract and subsample, by a point cloud, a source of the grasping target with a radius set to half a repeatability of a gripper of the robot (202) based on the object grasp,
   obtain a mapping, for each point in the point cloud, of a point on a surface link of the gripper at a distance away from a surface point of the grasping target, and
   determine approximations between the gripper and the grasping target based on an x and y coordinate of each point, the distance, and the surface link, and
   during an on-line phase of a high-performance grasping computation process:

      determine, from the approximations, grasping quality as a ranking of grasping configurations for the gripper, the ranking based on grasp quality metrics, and
      select one of the grasping configurations as the grasping configuration based on the grasp quality metrics.

12. A robot (202) comprising:

   processing circuitry (752); and
   memory (754) including instructions (782), which when executed by the processing circuitry (752) cause the processing circuitry (752) to:

      during an off-line phase, generate geometric primitives to model the robot (202), and
      during an on-line phase, select a grasping configuration based on a gripper of the robot (202) and a target, dependent the geometric primitives, a distance between the geometric primitive and the target, and an associated surface link.

13. The robot (202) of claim 12, wherein the instructions (782) further cause the processing circuitry (752) to, during the off-line phase:

   transform frames and meshes describing a three dimensional robot model into a geometric collection of primitives with associated directed distances,
   extract and fit primitives for each mesh in a Universal Robot Description Format "URDF" of the robot model, the extraction and fitting of each mesh comprising:

      determining a geometric centroid of the mesh,
      recentering all vertices of the mesh,
      determining a bounding box that spans a minimal volume for the mesh to define clipping-oriented planes, and
      determining a bounding ellipsoid that constrains only a pair of axes with minimal spans in the bounding box, and determining bounding ellipsoids for non-overlapping pairs of axes,
      for each joint set in the URDF, computing, for all vertices in the joint set, a minimal distance to a surface of each of the planes and ellipsoid primitives and sorting the minimal distances progressively in a list to form a distribution and compute a cut-off radius by a target percentile, and
      verify viability of a transformation of each robot model to form a robot link through computation of a Kurtosis

22

of the distribution, in response to a determination that the Kurtosis is greater than 0 and less than 0.5, provide a warning to a user, and in response to a determination that the Kurtosis is greater than 0.5, abort the transformation of the robot model and indicate that the robot model is unable to be transformed; and during the on-line phase:

compute forward kinematics of links from the URDF and an instantaneous configuration of the robot (202),
select, via a bounding box filter, a subset of geometric primitives close to objects as active geometric primitives based on a 6 dimensional state of each of the links,
determine an object grasp based on at least one of:

model-less using raw results of range sensing, from a plurality of sensors (772), without added attributes, or
model-based using a computer-aided design "CAD" or computer-aided manufacturing "CAM" model in which all vertices are collected, polygons are subdivided, and implicit curves and surfaces evaluated,
abstract and subsample, by a point cloud, a source of the grasping target with a radius set to a repeatability of the gripper based on the object grasp,
obtain a mapping, for each point in the point cloud, of a point on a surface link of the gripper at a distance away from a surface point of the grasping target, and
determine approximations between the gripper and the grasping target based on an x, y, and z coordinate of each point, the distance, and the surface link.

14. At least one machine-readable medium (754) including instructions (782), which when executed by processing circuitry (752) of a robot (202), cause the processing circuitry (752) to perform operations to:

during an off-line phase, generate geometric primitives to model the robot (202), and
during an on-line phase:

determine grasping configurations based on a gripper of the robot (202) and a grasping target, dependent on an x and y coordinate of each point of the geometric primitives, a distance between the point and the grasping target, and an associated surface link,
determine, based on grasp quality metrics, grasping quality as a ranking of the grasping configurations based on grasp quality metrics, and
select, based on the ranking, one of the grasping configurations to use to grasp the grasping target.

15. The at least one machine-readable medium (754) of claim 14, wherein the instructions (782) further cause the processing circuitry (752) to,
during the off-line phase:

transform frames and meshes describing a three dimensional robot model into a geometric collection of primitives with associated directed distances,
extract and fit primitives for each mesh in a Universal Robot Description Format "URDF" of the robot model, the extraction and fitting of each mesh comprising:

determining a geometric centroid of the mesh,
recentering all vertices of the mesh,
determining a bounding box that spans a minimal volume for the mesh to define clipping-oriented planes, and determining a bounding ellipsoid that constrains only a pair of axes with minimal spans in the bounding box, and determining bounding ellipsoids for non-overlapping pairs of axes,
for each joint set in the URDF, computing, for all vertices in the joint set, a minimal distance to a surface of each of the planes and ellipsoid primitives and sorting the minimal distances progressively in a list to form a distribution and compute a cut-off radius by a target percentile, and
verify viability of a transformation of each robot model to form a robot link through computation of a Kurtosis of the distribution, in response to a determination that the Kurtosis is greater than 0 and less than 0.5, provide a warning to a user, and in response to a determination that the Kurtosis is greater than 0.5, abort the transformation of the robot model and indicate that the robot model is unable to be transformed, and during the on-line phase:

compute forward kinematics of links from the URDF and an instantaneous configuration of the robot (202),
select, via a bounding box filter, a subset of geometric primitives close to objects as active geometric primitives based on a 6 dimensional state of each of the links,
determine an object grasp based on at least one of:

model-less using raw results of range sensing, from a plurality of sensors (772), without added attributes, or
model-based using a computer-aided design "CAD" or computer-aided manufacturing "CAM" model in which all vertices are collected, polygons are subdivided, and implicit curves and surfaces evaluated,
abstract and subsample, by a point cloud, a source of the grasping target with a radius set to a repeatability of the gripper based on the object grasp,
obtain a mapping, for each point in the point cloud, of a point on a surface link of the gripper at a distance away from a surface point of the grasping target, and
determine approximations between the gripper and the grasping target based on an x and y coordinate of each point, the distance, and the surface link.

FIG. 1

FIG. 2

$$|\lambda := [\alpha x, \beta y, yz]^T| \dashrightarrow \infty$$

$e_{\{\infty x\}}$

DETECTABILITY TEST: ANY TESTING POINT $\lambda$ AT INFINITY MAPS
AT THE TIP AT INFINITY $e_{\{\infty x\}}$ TO THE OPEN-CYLINDER,
NAMELY INFINITE ELLIPSOID AKA PROLATE SPHEROID

INFINITE PROLATE SPHEROID = OPEN-CYLINDER

POLYTOPE &
BOOLEAN
ELLIPSOID
COMPOSITION

COMPLEX
SHAPE VIA
INTERSECTION
OF PRIMITIVES

$z_i \in R^3$

$\psi_5$

$\psi_1$    $\psi_3$

$\psi_0$

$\psi_6$    $\psi_4$

ROBOT URDF

ROBOT GA-CSG URDF

$$\Upsilon(\Psi) \mapsto SO^3$$

GEOMETRIC ALGEBRA -
CONSTRUCTIVE SOLID
GEOMETRY

GA-CSG ROBOT-MODEL
DECOMPOSITION ALGORITHM

$$|\lambda := [\alpha x, \beta y, yz]^T| \dashrightarrow \infty$$

$e_{\{-\infty x\}}$

*FIG. 3A*

EP 4 470 729 A1

EP 4 470 729 A1

$$Z\left(x_j, (\Psi_1, \ldots, \Psi_6), (\xi_0, \xi_1, \xi_2)\right) \longmapsto \delta_j$$

$$\Omega_{1,0} = \xi_1 \wedge \xi_0$$

$\Omega_{1,0}$

$\xi_1$

$\xi_0$

$$\Omega_{1,0} = \xi_1 \wedge \xi_0$$

$\Omega_{1,0}$

$\xi_1$

$\xi_0$

*FIG. 3A*
*CONT.*

FIG. 3B

$$x \cdot H < 0 \,\&\, x \cdot G < 0$$

FIG. 4

EP 4 470 729 A1

**FIG. 5**

MULTIVECTOR A    MULTIVECTOR B

$e_1 e_2 e_3 \quad e_n \qquad e_1 e_2 e_3 \quad e_n$

| BLD (1) | BLD (2) | BLD (3) | . . . . | BLD (N) |

| BLD (1) | BLD (2) | BLD (3) | . . . . | BLD (N) |

| (1) | (2) | BLADE INDEX | (3) |

$e_1 e_2 e_3 \quad e_n$

RESULTANT BLADE

SIGN  123        23
                    } SWAPPING
  -    123        32
          +1
                    } ELIMINATION
  -     12          2
          +1

  -      1

$$e_{123} e_{23} = -e_1$$

MULTIVECTOR A    MULTIVECTOR B

| BLD (1) | BLD (2) | BLD (3) | . . . . | BLD (N) |

| BLD (1) | BLD (2) | BLD (3) | . . . . | BLD (N-1) | BLD (N) |

n-2 xor n-3

TO
AND
INPUTS

SIGN(BLD)

SWAP SIGN

EP 4 470 729 A1

FIG. 6

COMPUTE NOTE — 700

COMPUTE CIRCUITRY

704 — PROCESSOR

706 — MEMORY

702

708 — I/O SUBSYSTEM

710 — DATA STORAGE

714 — PERIPHERAL DEVICE(S)

712 — COMM. SUBSYSTEM

720 — NIC

FIG. 7A

*FIG. 7B*

Europäisches
Patentamt

European
Patent Office

Office européen
des brevets

# EUROPEAN SEARCH REPORT

Application Number

EP 23 21 6229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/365349 A1 (SHI ZHIPING [CN] ET AL) 20 December 2018 (2018-12-20) | 1 | INV. B25J9/16 |
| Y | * paragraph [0048] - paragraph [0053] * | 2-6, 10-15 | |
| A | | 7-9 | |
| | ----- | | |
| Y | SOROUR MOHAMED ET AL: "Grasping Unknown Objects Based on Gripper Workspace Spheres", 2019 IEEE/RSJ INTERNATIONAL CONFERENCE ON INTELLIGENT ROBOTS AND SYSTEMS (IROS), IEEE, 3 November 2019 (2019-11-03), pages 1541-1547, XP033695613, DOI: 10.1109/IROS40897.2019.8967989 [retrieved on 2020-01-23] | 2-6, 10-15 | |
| A | * Section II * * Section III * * Section IV * | 7-9 | |
| | ----- | | |
| Y | YUN HUITAEK ET AL: "Immersive and interactive cyber-physical system (I2CPS) and virtual reality interface for human involved robotic manufacturing", JOURNAL OF MANUFACTURING SYSTEMS, SOCIETY OF MANUFACTURING ENGINEERS, DEARBORN, MI, US, vol. 62, 3 December 2021 (2021-12-03), pages 234-248, XP086984288, ISSN: 0278-6125, DOI: 10.1016/J.JMSY.2021.11.018 [retrieved on 2021-12-03] | 2,5,6, 10,13,15 | TECHNICAL FIELDS SEARCHED (IPC) B25J |
| A | * Section 4.1 * | 7-9 | |
| | ----- | | |

The present search report has been drawn up for all claims

| Place of search | Date of completion of the search | Examiner |
|---|---|---|
| The Hague | 17 May 2024 | Lefeure, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6229

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | Publication date |
|---|---|---|---|
| US 2018365349 A1 | 20-12-2018 | CN 105760576 A | 13-07-2016 |
| | | CN 106777486 A | 31-05-2017 |
| | | US 2018365349 A1 | 20-12-2018 |
| | | WO 2017129093 A1 | 03-08-2017 |

EPO FORM P0459

For more details about this annex : see Official Journal of the European Patent Office, No. 12/82